Europäisches Patentamt

European Patent Office

Office européen des brevets

(11) Veröffentlichungsnummer: **0 668 362 A1**

## (12) EUROPÄISCHE PATENTANMELDUNG

(21) Anmeldenummer: **95102249.0**

(51) Int. Cl.6: **C22B 43/00**

(22) Anmeldetag: **18.02.95**

(30) Priorität: **21.02.94 DE 4405398**

(43) Veröffentlichungstag der Anmeldung:
**23.08.95 Patentblatt 95/34**

(84) Benannte Vertragsstaaten:
**AT BE CH DE DK FR GB GR IT LI NL SE**

(71) Anmelder: **Nordische
Ouecksilber-Rückgewinnung GmbH & Co.
Bei der Gasanstalt 9
D-23560 Lübeck (DE)**

(72) Erfinder: **Wolters, Ralf
Katharinenstrasse 63a
D-23554 Lübeck (DE)**
Erfinder: **Franck, Michael
An der Kehre 17
D-23569 Lübeck (DE)**

(74) Vertreter: **Meyer, Ludgerus A., Dipl.-Ing.
Meyer & Partner,
Jungfernstieg 38
D-20354 Hamburg (DE)**

(54) **Verfahren und Einrichtung zur kontinuierlichen thermischen Entquecksilberung eines Trägerstoffes.**

(57) Die Erfindung betrifft ein Verfahren und eine Einrichtung zur thermischen Entquecksilberung von Trägerstoffen, insbesondere von Leuchtstoff aus gebrauchten Leuchtstoffröhren, wobei der erhitzte Trägerstoff mit Schleppgas kontaktiert wird und das dadurch mit Quecksilber angereicherte Schleppgas anschließend zur Auskondensation des Quecksilbers abgekühlt wird. Das Verfahren wird bei Temperaturen von 50 - 200 °C durchgeführt und vorzugsweise kontinuierlich gefahren. Diese Temperaturen sind weitaus geringer als früher übliche und erlauben eine vereinfachte sowie kostengünstigere Durchführung eines Verfahrens zur Entquecksilberung von Leuchtstoff.

EP 0 668 362 A1

Die Erfindung betrifft ein Verfahren und eine Einrichtung zur kontinuierlichen thermischen Entquecksilberung eines Trägerstoffs, insbesondere Leuchtstoff aus gebrauchten Leuchtstoffröhren, nach dem Oberbegriff der Ansprüche 1 und 18.

Gegenwärtig werden in der Bundesrepublik jährlich etwa 30 Millionen gebrauchte Leuchtstofflampen bei Recycling-Unternehmen entsorgt und nach verschiedenen Verfahren verarbeitet. Die verwendeten Leuchtstoffe basierten früher vor allen Dingen auf Halogenphosphaten, die mit Arsen, Cadmium, Blei, Mangan und Antimon dotiert waren. Es wurde außerdem Quecksilber zur Lichterzeugung beigefügt. In der Lampe bestand eine Quecksilber-gesättigte Atmosphäre, wobei das Quecksilber in das Lampenmaterial diffundieren konnte, und ein Überschuß auf der Oberfläche des Leuchtstoffes an Quecksilber vorhanden war. Heutzutage werden für Leuchtstoffe vor allen Dingen seltene Erden mit 3-Banden-Leuchtstoffen verwendet, bei denen jedoch auch Quecksilber verwendet wird.

Die überwiegende Mehrzahl der Recyclingbetriebe verwendet für die Verarbeitung gebrauchter Leuchtstofflampen trocken arbeitende Endkappungs- oder Sieb- und Shredderverfahren, bei denen eine Leuchtstoff-Fraktion erzeugt wird, die nicht wieder verwertet werden kann. Aufgrund des hohen Anteils an Quecksilber und anderen Schwermetallen kann der Leuchtstoff nicht auf normalen Hausmülldeponien abgelagert werden. Das Gefahrenpotential des Leuchtstoffes kann jedoch deutlich verringert werden, wenn das Quecksilber - als einzige wiederverwertbare Komponente - entfernt wird.

Zur Zeit werden von den Recycling-Betrieben, die jährlich zwischen 2 und 3 Millionen Lampen im ein- oder zweischichtigen Betrieb wieder verwerten, mehrere Verfahren zur Entquecksilberung von Leuchtstoff praktiziert, bei denen es sich im wesentlichen um thermische Verfahren handelt, da hier der apparative und energetische Aufwand gegenüber naßchemischen Verfahren verhältnismäßig gering ist.

Aus der DE 39 32 772 A1 ist ein derartiges Sieb- und Shredderverfahren bekannt, mit dem Lampen aller Baugrößen und Bauformen verarbeitet werden können. Die Lampen werden über einen Einwurfschacht in die Anlage gegeben und gelangen von dort in eine Hammermühle, wo sie zerkleinert werden. Das zerkleinerte Material wird dann über eine Siebmaschine in Fraktion getrennt, die entweder weiterbehandelt oder einer Verwertung zugeführt werden können. Die Fraktionierung kann auch mittels Windsichtung erfolgen. Es werden drei Fraktionen erzeugt, eine Metall-, eine Gas- und eine Leuchtstoff-Fraktion, von denen die beiden Erstgenannten direkt verwertet werden.

Die Leuchtstoff-Fraktion wird in einem Ofen auf ca. 500°C aufgeheizt. Die Ausheizzeit beträgt pro Charge ca. 16 Stunden. Bei diesem Verfahren wird der Ofen nicht inertisiert, sondern mit gewöhnlicher Luft bei Normaldruck betrieben. Die Luft wird aus dem Ofenraum heraus mit einem Gehäuse über einen Wärmeaustauscher geführt, in dem das Quecksilber auskondensiert, und gelangt dann wieder zurück in den Ofen. Auf diese Weise entsteht ein geschlossener Kreislauf.

Da bei diesem Verfahren eine Charge Leuchtstoff zusammen mit dem Chargenbehälter und dem Ofen auf eine relativ hohe Temperatur, nämlich über 500°C, erwärmt wird, muß nach Beendigen des Anheiz-Prozesses das gesamte System abkühlen, bevor die Charge entnommen und der Ofen erneut beschickt werden kann. Auf diese Art müssen der Ofen und der Einsatzbehälter immer wieder neu aufgeheizt werden. Die langen Prozeßzeiten sind erforderlich, weil der Leuchtstoff nicht direkt mit dem Schlappgas in Berührung gebracht wird. Die Hg-Atome müssen folglich aus der Schüttung im Chargenbehälter an die Oberfläche diffundieren und können erst dann mit dem Schleepgasstrom von der Schüttgutoberfläche mitgerissen werden. Darüber hinaus verlängert sich die Aufheizzeit dadurch, daß der Wärmetransport in die Schüttung durch Leitung erfolgt, der Leuchtstoff jedoch ein beachtliches Lückenvolumen und damit schlechte Wärmeleiteigenschaften aufweist.

Ein weiteres, thermisches Verarbeitungsverfahren ist in der US 4 715 838 dargestellt. Das Verfahren ermöglicht die Verarbeitung stabförmiger Lampen. Diese werden der Maschine einzeln zugeführt, wo sie zunächst durch Bohren eines Loches belüftet werden, um Implosionen zu vermeiden. Anschließend wird je ein kurzes Endstück von beiden Seiten der Lampe abgetrennt, so daß ein beidseitig offener Lampenzylinder und zwei kurze Endstücke erhalten werden. Die Endstücke enthalten neben Glas die Aluminiumkappen, die Anschlußstifte, die Zuleitungsdrähte und Wolframfäden. Der Lampenzylinder besteht aus Glas und ist innen mit Leuchtstoff beschichtet. Der Leuchtstoff wird aus dem Zylinder auf einer Seite abgesaugt, während von der anderen Seite her ein Stempel eingeführt wird. Auch hier erhält man drei Fraktionen, nämlich eine Glas-, eine Leuchtstoff- und eine Endkappen-Fraktion. Der Vorteil gegenüber dem aus der DE 39 32 772 A1 bekannten Verfahren besteht darin, daß die Glasfraktion aus dem Lampenzylinder praktisch keinerlei Beimengungen von Fremdstoffen enthält. Nachteilig ist aber die Tatsache, daß nur gerade Lampen verarbeitet werden können, und dies auch nur innerhalb eines bestimmten Längenbereichs.

Der Leuchtstoff wird dann in Chargen zu je 120 l im Vakuum auf eine hohe Temperatur erwärmt. Als Inertgas wird kontinuierlich eine kleine Menge Stickstoff zugeführt. Das verdampfende Quecksilber wird zusammen mit dem Stickstoff durch Wärmeaustauscher geleitet, in denen es auskondensiert. Die gesamte Prozeßzeit einer Charge beträgt ca. 9 Stunden.

Schließlich offenbart die DE 41 31 974 C2 ein Verfahren, in dem eine große Anzahl geometrisch gleichartiger Leuchtstofflampen zusammengefaßt und in einem Arbeitsgang verarbeitet werden können. Die zu einer Verarbeitungseinheit zusammengefaßten Lampen werden beidseitig geöffnet, wobei gleichzeitig der Leuchtstoff mittels Druckluft aus den Lampenzylinders ausgetragen wird. Dies findet in einem abgeschlossenen Behälter statt, der sich auf dem gleichen Druckniveau wie das Innere der Lampen befindet. Die eingeblasene Luft wird zuvor auf 40 - 60°C angewärmt, um eine unbeabsichtigte Kodensation von Quecksilber zu vermeiden. Der herausgespülte Leuchtstoff und das Quecksilber werden in Wasser abgeschieden. Die Abtrennung von kondensiertem Quecksilber, Leuchtstoff und Wasser erfolgt durch Sedimentation. Der Leuchtstoff wird getrocknet, wobei mit der Trocknung eine weitere Entquecksilberung des Leuchtstoffes stattfinden kann. Da Wasser eine beträchtliche Verdampfungsemthalpie aufweist, stellt die Trocknung des Leuchtstoffes einen energieintensiven Vorgang dar, der möglichst vermieden werden sollte.

Es ist deshalb eine Aufgabe der vorliegenden Erfindung, ein Verfahren zur kontinuierlichen, thermischen Entquecksilberung eines Trägerstoffes, insbesondere Leuchtstoff aus gebrauchten Leuchtstoffröhren, vorzusehen, das bei niedrigen Temperaturen arbeitet, und mit geringen Prozeßzeiten auskommt. Der Erfindung liegt weiterhin die Aufgabe zugrunde, eine Einrichtung zur Durchführung des genannten Verfahrens anzugeben.

Diese Aufgaben werden durch die in den Ansprüchen 1 und 18 angegebene Erfindung gelöst. Vorteilhafte Weiterbildungen der Erfindung sind in Unteransprüchen angegeben.

Die Erfindung ist insbesondere zur Entquecksilberung von Leuchtstoff mit Luft als Schleppgas geeignet. Es ist jedoch auch möglich, andere Trägerstoffe, die gegenüber Quecksilber inert sind, zu entquecksilbern. Als Schleppgas eignen sich aber auch andere Gase, wie Stickstoff, $CO_2$ und Argon.

Das vorliegende Verfahren ist dadurch gekennzeichnet, daß der Trägerstoff lediglich bei einer Temperatur von 50 - 200°C, insbesondere 100 - 200°C, durchströmt wird. Diese geringe Temperatur ist ausreichend, da die sorptiven Kräfte zwischen Quecksilber und Trägerstoff nur gering sind.

Die folgenden Überlegungen führten zur Ermittlung eines optimalen Temperaturbereichs. Es wurde von folgenden Annahmen ausgegangen:

1. Die sorptiven Kräfte zwischen Trägerstoff und Hg werden vernachlässigt.
2. Das gesamte auf dem Trägerstoff befindliche Hg geht in eine gewisse Schleppgasmenge über. Die erforderliche Schleppgasmenge ist von der Hg-Menge im System abhängig sowie von der Gastemperatur. Sie kann aus der Dampfdruckkurve des Quecksilbers ermittelt werden.
3. Schleppgas und der Trägerstoff werden auf die gleiche Temperatur aufgeheizt. Unter Anwendung des idealen Gasgesetzes wird eine Gleichung hergeleitet, die die spezifische notwendige Wärmemenge zum Ausheizen des Trägerstoffes beschreibt:

$$\frac{Q}{m'} = \left[ c_p' + \frac{R * c_p''}{M_{Hg}} * \frac{\rho'' * T}{P_{Hg}} * X_{Hg} \right] * (T - T_o)$$

mit folgenden Größen

| | | |
|---|---|---|
| Q | = | Wärmemenge |
| m' | = | Masse des Trägerstoffes |
| $c_p'$ | = | spez. Wärmekapazität des Leuchtstoffes |
| $c_p''$ | = | spez. Wärmekapazität des Schleppgases |
| $M_{Hg}$ | = | Molmasse von Quecksilber |
| $P_{Hg}$ | = | Dampfdruck des Quecksilbers |
| R | = | allgemeine Gaskonstante |
| T | = | absolute Temperatur im System |
| $X_{Hg}$ | = | Quecksilberbeladung des Trägerstoffes |
| $T_o$ | = | ursprüngliche Temperatur von Trägerstoff und Schleppgas (Umgebungstemperatur) |
| $\rho''$ | = | Dichte des Schleppgases. |

Vorzugsweise wird der Trägerstoff in einem Wirbelschichtbett durchströmt, wodurch besonders günstige Bedingungen für den Wärme- und Stoffübergang realisiert werden, wenn der Trägerstoff in der Gasphase dispergiert wird.

In einer alternativen Ausführungsform wird der Trägerstoff in einem Heißgasfilter durchströmt. Auf dem Heißgasfilter bildet sich ein Filterkuchen aus abgeschiedenem Trägerstoff, der von dem heißen Schleppgas durchströmt wird, das sich dabei mit Quecksilber anreichert. Mit der thermischen Entquecksilberung auf der Oberfläche des Heißgasfilters können verhältnismäßig lange Zeiten für den Phasenkontakt zwischen Trägerstoff und Schleppgas realisiert werden, so daß eine weitere Entquecksilberung stattfinden kann.

In einer weiteren bevorzugten Ausführungsform wird das den Trägerstoff durchströmende Schleppgas in einem geschlossenen Kreislauf geführt. Durch dieses kontinuierliche Verfahren wird nur der Trägerstoff aufgeheizt und nachher wieder abgekühlt, jedoch nicht die dafür benötigte Vorrichtung, wodurch Energie und Zeit eingespart wird.

Die Entquecksilberung erfolgt vorzugsweise bei einer Temperatur, bei der die spezifische Wärmemenge zur thermischen Entquecksilberung nach der o.g. Formel ein Minimum aufweist.

Die eindeutig ausgeprägten Minima liegen im Temperaturbereich zwischen 100 und 150°C. Die günstigste Temperatur für die thermische Entquecksilberung von Leuchtstoff liegt also zwischen 100 und 150°C.

In einer weiteren bevorzugten Ausführungsform des Verfahrens der vorliegenden Erfindung wird der Trägerstoff in einem Ofen mit Schleppgas beaufschlagt und über eine Wirbelschicht auf 50 - 200°C erwärmt. Dabei findet ein Stoffübergang des Quecksilbers vom Trägerstoff auf Schleppgas statt, während ein Wärmeübergang in der entgegengesetzten Richtung stattfindet. Das mit Quecksilber angereicherte Schleppgas wird über eine Rohrleitung einem Wärmetauscher zugeführt und dort abgekühlt, wobei das Quecksilber auskondensiert, während das Schleppgas im Kreislauf verbleibt, so daß eine kontinuierliche Entquecksilberung durchgeführt werden kann.

Ein Teil des Schleppgases, das insbesondere Luft ist, kann zur Aufrechterhaltung eines Unterdrucks im System in einer weiteren bevorzugten Ausführungsform über einen Aktivkohlefilter aus dem System ausgeschieden werden, wodurch das Schleppgas von allen eventuell noch vorhandenen Quecksilberspuren gereinigt wird.

Der Trägerstoff kann vorzugsweise kontinuierlich durch den Ofen geführt werden, so daß ein aufwendiger Chargenbetrieb unnötig wird.

In einer weiteren bevorzugten Ausführungsform wird der den Ofen verlassende Schleppgasstrom über ein Staubabscheideorgan geführt, so daß das Schleppgas von etwaigen noch vorhandenen Staubresten befreit wird. Vorzugsweise wird ein Teil des im Abscheideorgan abgeschiedenen Staubes in den Ofen zurückgeführt, während ein anderer Teilstrom über ein anderes Förderorgan aus dem System ausgeschleust wird, so daß eine weitere Entquecksilberung stattfinden kann.

Eine weitere bevorzugte Ausführungsform ist dadurch gekennzeichnet, daß ein Gemisch aus Trägerstoff und erhitztem Abschleppgas einem Abscheideorgan zugeführt wird, in dem der Trägerstoff von dem Schleppgas durchströmt wird, daß der Trägerstoff aus dem Abscheideorgan ausgetragen wird, und daß das im Abscheideorgan mit Quecksilber angereicherte Schleppgas einem ersten Wärmetauscher zugeführt wird, in dem Quecksilber auskondensiert, und daß das entquecksilberte Schleppgas über einen zweiten Wärmetauscher erneut aufgeheizt wird. Vorzugsweise kann ein Gemisch aus Trägerstoff und Schleppgas abwechselnd über ein erstes Abscheideorgan und ein zweites Abscheideorgan geführt werden.

Eine weitere bevorzugte Ausführungsform berücksichtigt die unterschiedlichen notwendigen spezifischen Wärmemengen zum Aufheizen des Trägerstoffes bei unterschiedlich starker Beladung mit Quecksilber. Wie der oben dargestellten Formel zu entnehmen ist, wird maximal beladener Trägerstoff idealerweise auf etwa 150°C aufgeheizt, während minimal quecksilberbeladener Leuchtstoff vorzugsweise bei etwa 120°C ausgeheizt wird. Es kann deshalb ein zweistufiges Verfahren vorgesehen sein, wobei in einem ersten Schritt der quecksilberreiche Trägerstoff auf 150°C im Ofen erwärmt wird und in einem zweiten Schritt der teilgereinigte Trägerstoff einem weiteren Ofen zugeführt wird und dort bei 120°C ausgeheizt wird. Dieses Verfahren ist besonders dann geeignet, wenn bereits eine Analyse des Trägerstoffes vorliegt.

Vorzugsweise wird der dem Wirbelschichtofen oder der Mischvorrichtung zugeführte Trägerstoff vorgewärmt, um die erforderliche Heizenergie der Luft zu begrenzen.

Es ist auch eine Einrichtung vorgesehen zur Durchführung eines Verfahrens nach Anspruch 1 mit einem Vorratsbehälter, aus dem mit Quecksilber beladener Trägerstoff ausgetragen und einer Schleppgasströmung ausgesetzt wird, bei der das mit Quecksilber angereicherte Schleppgas zur Abkühlung durch einen ersten Wärmetauscher mit Kondensatablauf geführt ist, mit einem zweiten Wärmetauscher zum Aufheizen des Schleppgases und einem Gebläse, mit einer Mischvorrichtung zur innigen Durchmischung des Trägerstoffes mit Schleppgas, und mit einer Vorrichtung zum Austragen des entquecksilberten Leuchtstoffes aus der Mischvorrichtung.

Vorzugsweise wird der quecksilberbeladene Trägerstoff einem Ofen zugeführt, der mit einem Anströmboden versehen ist, so daß eine Wirbelschicht entsteht. Wie oben beschrieben, findet dabei ein Stoffaustausch statt, wobei das Quecksilber vom Trägerstoff auf das Schleppgas überwechselt.

In einer alternativen Ausführungsform ist die Mischvorrichtung ein Mischrohr mit anschließenden Abscheideorgan. In bevorzugten Ausführungsformen ist das Abscheideorgan ein Zyklonabscheider oder ein Heißgasfilter. Vorzugsweise wird das Schleppgs im geschlossenen Kreislauf geführt.

Eine weitere bevorzugte Ausführungsform der Einrichtung gemäß der Erfindung ist dadurch gekennzeichnet, daß dem Wirbelschichtofen ein Abscheideorgan im Gasströmungsweg nachgeschaltet ist, aus dem abgeschiedener Trägerstoff wenigstens zum Teil über eine Rohrleitung zum Wirbelbettofen zurückgeführt ist.

Eine alternative Ausführungsform ist dadurch gekennzeichnet, daß ein erstes Abscheideorgan vorgesehen ist, das alternativ zu einem zweiten Abscheideorgan an die Mischvorrichtung anschaltbar ist, wobei das das Abscheideorgan verlassende Schleppgas auf einen Wärmetauscher zur Kondensatableitung geschaltet ist, während das abgeschaltete Abscheideorgan an eine Kaltluftzufuhr angeschlossen ist.

Für den Fall, daß größere Staubmengen aus dem Ofenraum ausgetragen werden, kann in einer bevorzugten Ausführungsform in Richtung vor dem ersten Wärmetauscher ein Staubabscheider vorgesehen sein.

In einer weiteren alternativen Ausführungsform wird der Systemdruck gegenüber der Umgebung erniedrigt, indem mit einer Pumpe eine Schleppgasmenge aus dem System abgesaugt wird. Die Druckdifferenz zur Umgebung braucht nur gering zu sein. Das Schleppgas sollte hinter dem ersten Wärmetauscher abgesaugt werden, damit zusammen mit dem abgesaugten Schleppgas eine möglichst geringe Quecksilbermenge aus der Vorrichtung gelangt. Diese Quecksilbermengen können z. B. in einem Aktiv-Kohlefilter absorbiert werden.

In einer alternativen Ausführungsform kann die Vorrichtung auch in einem sekundären abgesaugten Gehäuse untergebracht werden.

In einer weiteren bevorzugten Ausführungsform wird der Wärmeübergang in der zirkulierenden Wirbelschicht dadurch verbessert, daß man auf den Anströmboden zusätzlich Inertmaterial gibt, das im stationären Zustand ein homogenes Wirbelbett ausbildet. Der Trägerstoff wird innerhalb dieser Wirbelschicht in den Ofenraum gegeben. Die Inertstoffpartikel erzeugen zusätzliche Turbulenzen der Schleppgasströmung, wodurch der Wärmeübergang von dem Schleppgas an die Partikel verbessert wird. Trägerstoffpartikel werden auf ihrem Weg durch den Ofenraum häufig mit dem Inertstoff kollidieren, wobei Wärme durch den direkten Kontakt übertragen wird.

Im weiteren werden das Verfahren und die Einrichtung gemäß der vorliegenden Erfindung anhand eines Ausführungsbeispiels und einigen Zeichnungen im einzelnen beschrieben. Dabei zeigen:

Fig. 1     eine Einrichtung zur Entquecksilberung von Leuchtstoff mit Unterdruckerzeugung im System,

Fig. 2     eine Darstellung zur spezifischen Heizleistung für eine Entquecksilberung in Abhängigkeit von der Temperatur,

Fig. 3     eine Einrichtung gemäß Fig. 1 innerhalb eines abgesaugten Gehäuses,

Fig. 4     eine alternative Ausführungsform der vorliegenden Erfindung,

Fig. 5     eine Einrichtung zur thermischen Entquecksilberung von Leuchtstoff auf einer Filterfläche mit Unterdruckerzeugung im System, und

Fig. 6     eine Einrichtung zur semikontinuierlichen Entquecksilberung von Leuchtstoff.

In den nachfolgenden Ausführungen wird die Erfindung lediglich am Beispiel von Leuchtstoff als Trägerstoff und Luft als Schleppgas beschrieben, ohne darauf beschränkt zu sein.

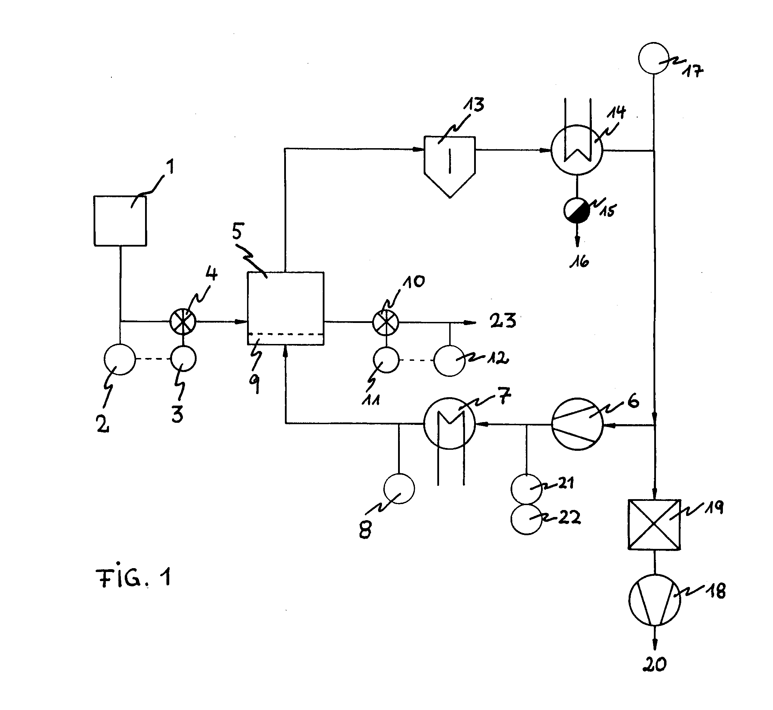

In Fig. 1 ist eine Einrichtung zur kontinuierlichen thermischen Entquecksilberung von Leuchtstoff aus gebrauchten Leuchtstoffröhren dargestellt. Der Leuchtstoff wird kontinuierlich aus einem Vorratsbehälter 1 über ein Dosierorgan 4 mit einem Motor 3 in einen Ofenraum 5 befördert. Eine Durchflußanzeige- und regelung 2 ist vorgesehen, um die Menge an zugeführtem Leuchtstoff zu kontrollieren. Ein Gebläse 6 fördert Luft in den Ofenraum 5, wobei die Luft, bevor sie den Ofen 5 erreicht, durch einen Wärmetauscher bzw. Lufterhitzer 7 erwärmt wird. Im unteren Bereich des Ofenraums 5 befindet sich ein geneigter Anströmboden 9, auf dem sich eine Wirbelschicht ausbildet. In der Wirbelschicht findet ein Wärmeübergang von der Luft an den Leuchtstoff und ein Stoffübergang des Quecksilbers in umgekehrter Richtung statt. Der entquecksilberte Leuchtstoff 23 wird über das Förderorgan 10 mit einem Motor 11 aus dem Ofenraum herausgefördert und dort in geeigneter Weise aufgefangen, um entsorgt zu werden. Entquecksilberter Leuchtstoff muß nicht, wie quecksilberbeladener Leuchtstoff, auf eine unterirdische Deponie verbracht werden, sondern kann auf oberirdischen Sondermülldeponien gelagert werden. Auch an dieser Stelle ist eine Durchflußanzeige und -regelung 12 vorgesehen.

Die mit Quecksilber angereicherte Luft verläßt den Ofenraum 5 über eine Rohrleitung und wird in einem Wärmetauscher 14 abgekühlt. Vorzugsweise ist vor den Wärmetauscher 14 ein Staubabscheider 13 geschaltet, so daß auch in dem Fall, daß größere Staubmengen aus dem Ofenraum 5 ausgetragen werden, keine Probleme zu großer Beladung der Luft mit Leuchtstoff entstehen. Das Quecksilber kondensiert im Wärmetauscher 14 aus und wird über einen Kondensatableiter 15 entnommen. Das auskondensierte Quecksilber 16 kann einem Recycling zugeführt und wiederverwendet werden. Die im Wärmetauscher 14 abgekühlte und entquecksilberte Luft wird mit einem Gebläse 6 über den Lufterhitzer 7 zurück in den Ofenraum 5 gefördert. Über eine Temperaturanzeige- und regelung 8, die dem Wärmetauscher 7 nachgeschaltet ist, wird die Temperatur der Luft gesteuert und eventuell korrigiert.

Die Anlage muß hermetisch geschlossen sein, damit keine Quecksilberdämpfe austreten können. Als zusätzliche Sicherheit kann der Systemdruck gegenüber der Umgebung erniedrigt werden, indem mit einer Pumpe 18 eine Luftmenge ständig aus der Einrichtung abgesaugt wird. Die Druckdifferenz zur Umgebung braucht nur gering zu sein. Die Luft muß hinter dem Wärmetauscher 14 abgesaugt werden, damit zusammen mit der abgesaugten Luft 20 nur möglichst geringe Quecksilbermengen aus dem System gelangen. Diese Quecksilbermengen können vorzugsweise in einem Aktivkohlefilter 19 absorbiert werden, der vor die Pumpe 18 geschaltet ist. Hinter dem Wärmetauscher 14 ist ebenfalls eine Temperaturanzeige 17 vorgesehen, die bei einer Grenzüberschreitung einen Alarm auslöst.

Bei einer Einrichtung dieser Art wird der Ofen vorzugsweise auf 100 - 200°C erhitzt, besonders bevorzugt auf 120 - 150°C. Diese geringe Temperatur ist ausreichend, um den Stoffübergang von Quecksilber vom Leuchtstoff auf Luft stattfinden zu lassen, da die sorptiven Kräfte zwischen Quecksilber und Leuchtstoff sehr gering sind. Der optimale Temperaturbereich von 120 - 150°C wurde unter Anwendung des idealen Gasgesetzes berechnet, wie bereits weiter oben beschrieben. Durch das verwendete Wirbelschichtverfahren werden besonders günstige Bedingungen für den Wärme- und Stoffübergang realisiert, wenn der Leuchtstoff als Gasphase vorliegt.

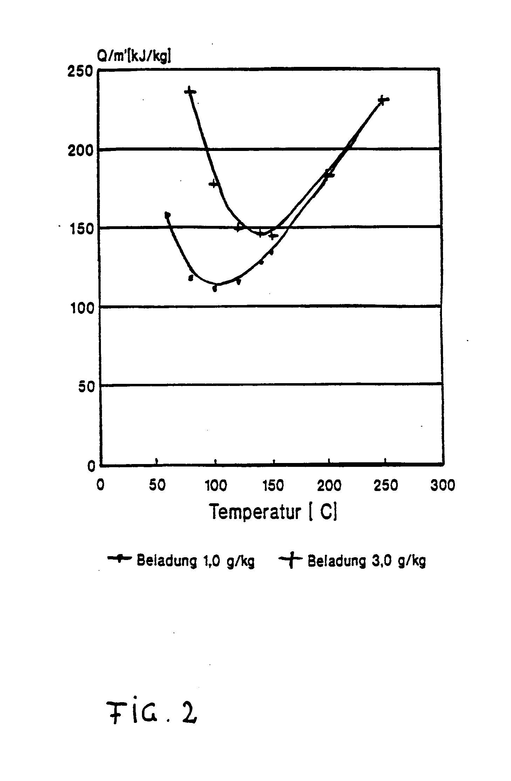

In Fig. 2 ist die spezifische Heizleistung in der Einheit KJ / kg als Funktion der Temperatur dargestellt. Die Graphik ist von der o.g. Formel abgeleitet, der die Zustandsgleichung für ideale Gase zugrundeliegt, wobei als Umgebungstemperatur 20°C angesetzt wurden. Die beiden Kurven entsprechen der minimalen (1,0 g / kg) und der maximal üblichen (3,0 g / kg) Quecksilberbeladung von Leuchtstoff. Beide Kurven weisen ausgeprägte Minima im Temperaturbereich zwischen 100 - 150°C auf. Dieser Temperaturbereich ist daher der energetisch günstigste für eine Entquecksilberung von Leuchtstoff. Es läßt sich außerdem aus den beiden Kurven ableiten, daß stark beladener Leuchtstoff am günstigsten bei ca. 150°C entquecksilbert wird, während die günstigste Temperatur für nur schwach beladenen Leuchtstoff bei ca. 110°C liegt.

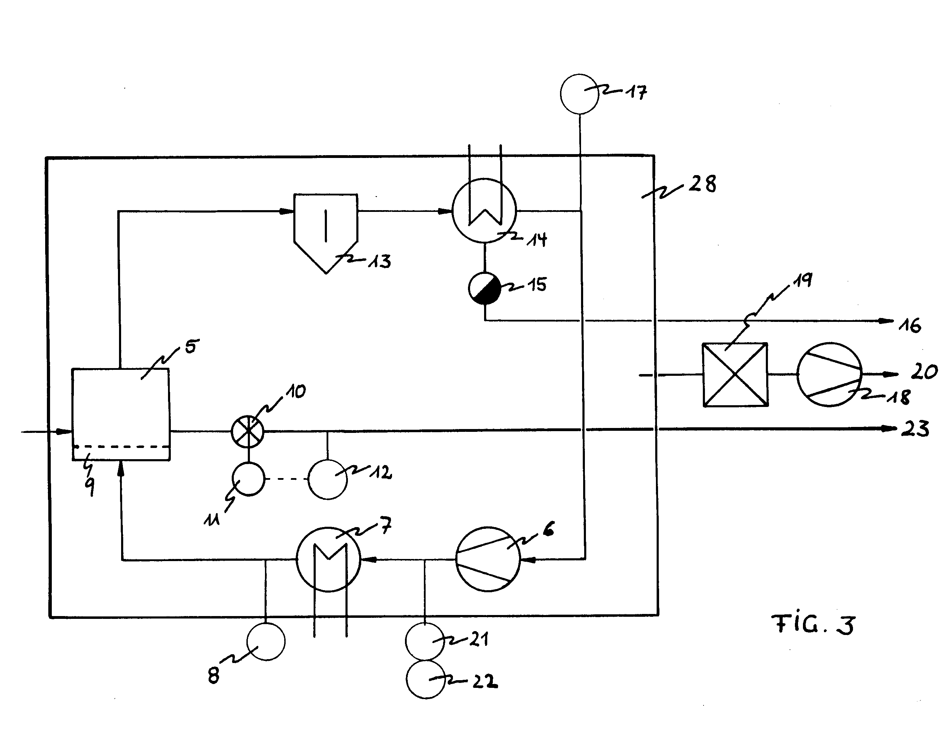

Fig. 3 zeigt eine Einrichtung zur thermischen Entquecksilberung von Leuchtstoff, die entsprechend der Vorrichtung der Fig. 1 aufgebaut ist. Zusätzlich ist ein externes Gehäuse 28 um die Vorrichtung vorgesehen, um sicherzustellen, daß keine Quecksilberdämpfe an die Umgebung austreten können. Der Aktivkohlefilter 19 und die Pumpe 18 sind dabei an das Gehäuse angeschlossen und außerhalb des Gehäuses angeordnet. Zwischen Gebläse 6 und Wärmetauscher 7 können eine Durchflußanzeige- und regelung 21 sowie eine Druckanzeige 22 geschaltet sein, die einen Alarm und eine Notabschaltung bei Grenzwertüberschreitung auslöst.

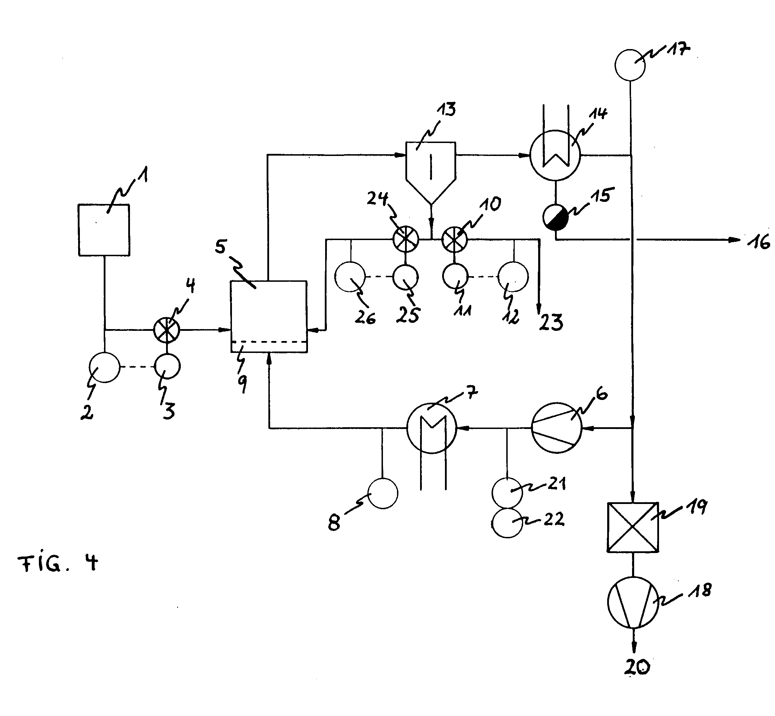

Fig. 4 zeigt ein alternatives Verfahren zur thermischen Entquecksilberung von Leuchtstoff. Hierbei wird aus einem Vorratsbehälter 1 mit einem Förderorgan 4 eine bestimmte Menge Leuchtstoff in den Ofenraum 5 gefördert. Dort wird der Leuchtstoff während einer ausreichenden Zeitspanne mit warmer Luft behandelt. Während der thermischen Behandlung des Materials wird dem System weder Leuchtstoff zugeführt noch entnommen. Während der Behandlung des Leuchtstoffs im Ofen mit warmer Luft findet wiederum der Stoffübergang des Quecksilbers von Leuchtstoff auf Luft statt, sowie ein Wärmeübergang von Luft auf den Leuchtstoff. Auch diese alternative Ausführungsform kann als zirkulierendes Wirbelschichtverfahren ausgebildet sein. Dabei ist die Luftgeschwindigkeit im Ofenraum 5 in diesem Fall größer als die Sinkgeschwindigkeit der Leuchtstoffpartikel. Der in den Ofenraum 5 eingebrachte Leuchtstoff wird aus dem Ofenraum 5 ausgetragen und anschließend über eine geeignete Vorrichtung, wie z. B. einen Staubabscheider 13 aus dem Luftstrom abgeschieden. Die Wärme- und Stofftransportvorgänge finden während der Verweilzeit des Leuchtstoffes im Ofenraum 5 statt. Für den Fall, daß die Verweilzeit zu gering sein sollte, kann ein Teilstrom des abgeschiedenen heißen Leuchtstoffes mit einem weiteren Förderorgan 24 über einen Motor 25, der mit einer Durchflußanzeige 26 versehen sein kann, in den Ofenraum 5 zurückgefördert werden und ein weiteres Mal behandelt werden. Der andere Teilstrom wird über das Förderorgan 10 aus dem System ausgeschleust. Dieser entquecksilberte Leuchtstoff kann, wie oben beschrieben, oberirdisch entsorgt werden.

Die weitere Behandlung der leuchtstoffangereicherten Luft geschieht wie bei den vorher beschriebenen Ausführungsformen, d.h. die Luft wird einem Wärmetauscher 14 zugeführt, in dem die Luft abgekühlt wird, wobei das Quecksilber auskondensiert und durch einen Kondensatableiter einer weiteren Verwertung zugeführt wird. Über eine Pumpe 6 wird die abgekühlte Luft dem Lufterhitzer 7 zugeführt und von diesem wieder dem Ofen 5 zugeleitet. Auch bei diesem System ist es möglich, durch eine Pumpe 18 einen Unterdruck im System zu erzeugen, indem Luft 20 abgesaugt wird. Zur Sicherheit kann auch hier ein Aktivkohlefilter 19 vor der Pumpe vorgesehen sein, um sicher zu gehen, daß die Abluft quecksilberfrei ist. Die Einrichtung kann entsprechend Fig. 3 auch in einem geschlossenen Gehäuse untergebracht sein.

Der Wärmeübergang in der zirkulierenden Wirbelschicht, die in jeder der beschriebenen Ausführungsform verwendet wurde, kann dadurch verbessert werden, daß man auf den Anströmboden Inertmaterial gibt, das im stationären Zustand ein homogenes Wirbelbett ausbildet. Der Leuchtstoff wird innerhalb dieses Wirbelbettes in den Ofenraum gegeben. Die Inertstoffpartikel erzeugen zusätzliche Turbulenzen in der Luftströmung, wodurch der Wärmeübergang von der Luft an Leuchtstoffpartikel verbessert wird. Leuchtstoffpartikel werden auf ihrem Weg durch den Ofen häufig mit dem Inertstoff kollidieren, wobei Wärme durch den direkten Kontakt übertragen wird.

Für den Fall, daß die Verweilzeit im Ofenraum 5 zu kurz ist, um den Leuchtstoff ausreichend zu erhitzen, kann die Förderleitung zwischen dem Förderorgan 4 und dem Ofenraum 5 von außen beheizt werden. Das Förderorgan 4 kann entsprechend auch als beheizte Förderschnecke ausgeführt werden.

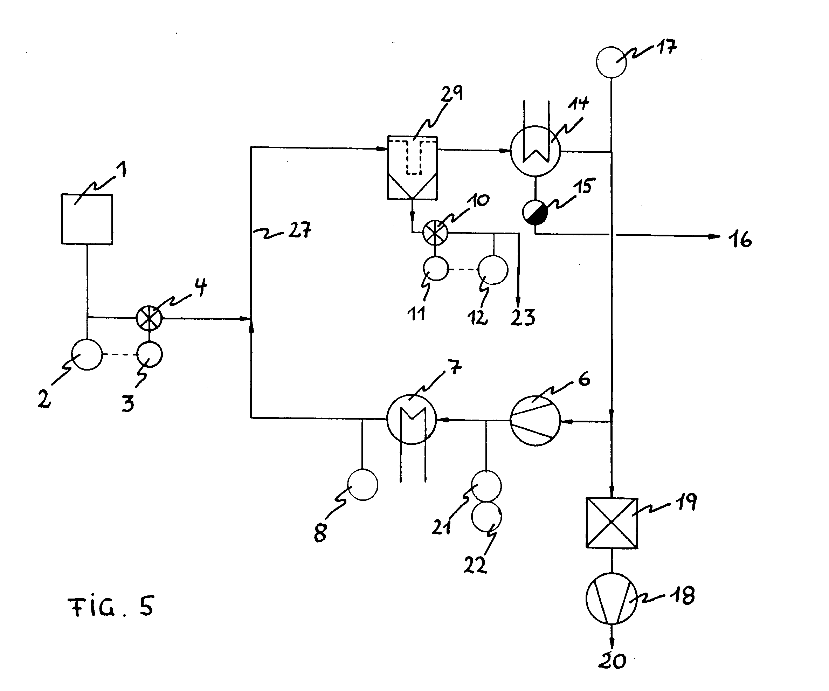

Neben den beschriebenen Möglichkeiten der thermischen Entquecksilberung von Leuchtstoff in Wirbelschichten kann die Entquecksilberung auf der Oberfläche von Filtermedien geschehen, wie in Fig. 5 dargestellt. Bei diesem System entfällt der Ofenraum 5. Der Leuchtstoff wird von einem Vorratsbehälter 1 über ein Förderorgan in eine als Mischvorrichtung dienende Luftleitung 27 zwischen dem Lufterhitzer 7 und einem Heißgasfilter 29 eingespeist. Auf dem Heißgasfilter 29 bildet sich ein Filterkuchen aus abgeschiedenem Leuchtstoff, der von der heißen Luft durchströmt wird, die sich dabei mit Quecksilber anreichert. Wie bereits beschrieben, finden die erwähnten Stoff- und Wärmeübergänge statt, der entquecksilberte Leuchtstoff 23 wird über das Förderorgan 10 seiner Entsorgung zugeleitet. Die mit Quecksilber angereicherte Luft wird über eine weitere Leitung dem Wärmetauscher 14 zugeführt, dort abgekühlt und das Quecksilber wird über einen Kondensatableiter 15 seiner Wiederverwertung zugeführt. Auch dieses System kann als geschlossenes kontinuierliches System betrieben werden, d.h. die abgekühlte Luft wird über eine Pumpe dem Lufterhitzer 7 zugeführt und über die Leitung 27 wieder mit dem Quecksilber-beladenen Leuchtstoff in Verbindung gebracht. Bei dieser Vorrichtung kann ebenfalls Teilluft durch eine Pumpe abgesaugt werden, der vorzugsweise ein Aktivkohlefilter vorgeschaltet ist.

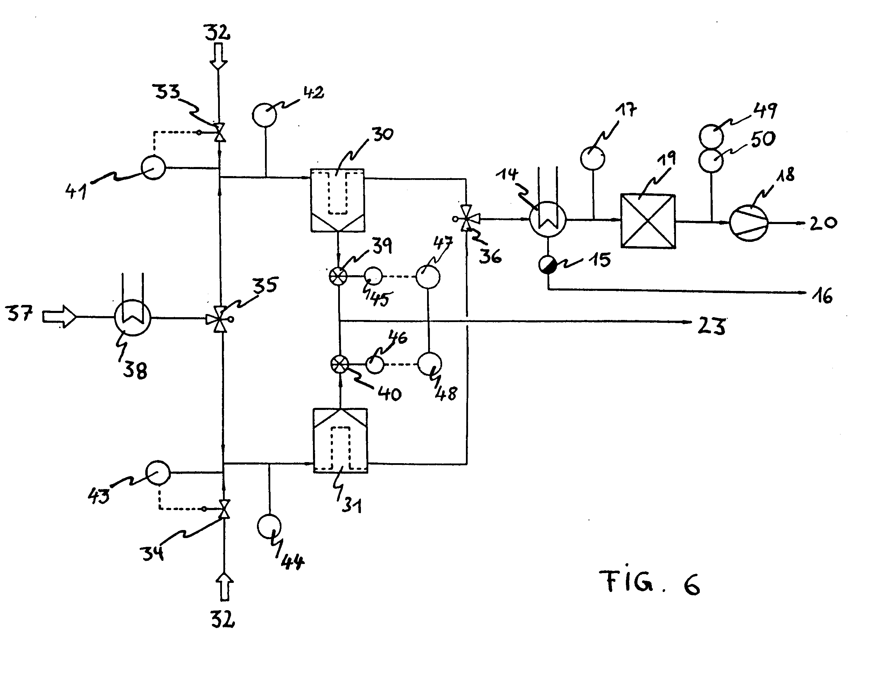

In Fig. 6 ist eine Ausführungsform der Einrichtung für semikontinuierliche Fahrweise dargestellt. Diese Anordnung eignet sich insbesondere für die Entquecksilberung von Leuchtstoff in pneumatischen Transportsystemen. In diesem Fall ist der Leuchtstoff bereits im Förderluftstrom dispergiert. Wenn der Leuchtstoff z. B. aus einem Bunker entnommen wird, ist ein vorgeschaltetes Mischrohr erforderlich. Die einzelnen Heißgasfilter 30, 31 können dabei jeweils nicht kontinuierlich, sondern nur diskontinuierlich abgereinigt werden. Der Luftstrom 37 mit Leuchtstoff wird über einen Wärmetauscher 38 und die Klappe 35 abwechselnd dem Filter 30 und dem Filter 31 zugeführt. Der Luftstrom mit Leuchtstoff 37 kann dabei jeweils über Ventile 33, 34 mit zusätzlicher Luft 32 vermischt werden, um im Bedarfsfall das Mengenverhältnis zwischen Luft und Leuchtstoff zu verbessern, wobei der zusätzliche Luftstrom 32 über eine Durchflußanzeige 41, 43, die mit dem jeweiligen Ventil 33, 34 verbunden ist, gesteuert wird. Vor Eintritt in den jeweiligen Filter 30, 31 ist eine Temperaturanzeige und -regelung 42, 44 vorgesehen. Auf dem jeweiligen Heißgasfilter 30 oder 31 bildet sich ein Filterkuchen aus abgeschiedenem Leuchtstoff, der von der Luft durchströmt wird, die sich dabei mit Quecksilber anreichert. Der wie oben bereits beschriebene entquecksilberte Leuchtstoff 23 wird über das Förderorgan 39, 40 mit Motoren 45, 46 und Druckflußanzeigen und -regelungen 47, 48 seiner Entsorgung zugeleitet. Der jeweils gefilterte Luftstrom gelangt über die Klappe 36 in den Wärmetauscher 14, in dem die Kondensation stattfindet. Während auf dem einen Filter der abgeschiedene Leuchtstoff entquecksilbert wird, wird der andere Filter gereinigt. Die Abluft 20 kann wie oben bereits beschrieben, über einen Aktivkohlefilter 19 mit vorgeschalteter Temperaturanzeige 17, und dann die Pumpe 18, der wiederum eine Druckanzeige 49 mit einer Durchflußanzeige und -regelung 50 vorgeschaltet ist, weiter gereinigt werden.

Bei dieser Variante ist es besonders einfach, den noch heißen entquecksilberten Leuchtstoff abzukühlen, da der Filter 30, 31 vor der eigentlichen Abreinigung über die Ventile 33 bzw. 34 mit kalter Luft 32 beaufschlagt werden kann.

**Bezugszeichenliste**

| | |
|---|---|
| 1 | Vorratsbehälter |
| 2 | Durchflußanzeige und -regelung |
| 3 | Motor |
| 4 | Dosierorgan |
| 5 | Wirbelschicht-Ofen |
| 6 | Gebläse |

| | |
|---|---|
| 7 | Wärmetauscher |
| 8 | Temperaturanzeige und -regelung |
| 9 | Anströmboden |
| 10 | Förderorgan |
| 11 | Motor |
| 12 | Durchflußanzeige und -regelung |
| 13 | Staubabscheider |
| 14 | Wärmetauscher |
| 15 | Kondensatableiter |
| 16 | Kondensat Hg |
| 17 | Temperaturanzeige |
| 18 | Pumpe |
| 19 | Aktivkohlefilter |
| 20 | Abluft |
| 21 | Durchflußanzeige und -regelung |
| 22 | Druckanzeige |
| 23 | Leuchtstoff entquecksilbert |
| 24 | Förderorgan |
| 25 | Motor |
| 26 | Durchflußanzeige und -regelung |
| 27 | Leitung |
| 28 | Gehäuse |
| 29 | Heißgasfilter |
| 30 | Heißgasfilter |
| 31 | Heißgasfilter |
| 32 | Luft |
| 33 | Ventil |
| 34 | Ventil |
| 35 | Klappe |
| 36 | Klappe |
| 37 | Prozeßluft mit Leuchtstoff |
| 38 | Wärmetauscher |
| 39 | Förderorgan |
| 40 | Förderorgan |
| 41 | Durchflußanzeige und -regelung |
| 42 | Temperaturanzeige und -regelung |
| 43 | Durchflußanzeige und -regelung |
| 44 | Temperaturanzeige und -regelung |
| 45 | Motor |
| 46 | Motor |
| 47 | Durchflußanzeige und -regelung |
| 48 | Durchflußanzeige und -regelung |
| 49 | Druckanzeige |
| 50 | Durchflußanzeige und -regelung |

**Patentansprüche**

1. Verfahren zur thermischen Entquecksilberung von quecksilberhaltigen Trägerstoffen, insbesondere Leuchtstoff aus gebrauchten Leuchtstoffröhren, bei dem der erhitzte Trägerstoff mit Schleppgas kontaktiert wird und das dadurch mit Quecksilber angereicherte Schleppgas anschließend zur Auskondensation des Quecksilbers abgekühlt wird, dadurch gekennzeichnet, daß der Trägerstoff bei einer Temperatur von 50 - 200°C durchströmt wird.

2. Verfahren nach Anspruch 1, dadurch gekennzeichnet, daß der Trägerstoff in einem Wirbelschichtbett (9) durchströmt wird.

3. Verfahren nach Anspruch 1, dadurch gekennzeichnet, daß der Trägerstoff in einem Heißgasfilter (29) durchströmt wird.

8

4. Verfahren nach einem der Ansprüche 1 bis 3, <u>dadurch gekennzeichnet,</u> daß das den Trägerstoff durchströmende Schleppgas in einem geschlossenen Kreislauf geführt wird.

5. Verfahren nach Anspruch 1, <u>dadurch gekennzeichnet,</u> daß das Schleppgas Luft ist.

6. Verfahren nach Anspruch 1, <u>dadurch gekennzeichnet,</u> daß das Schleppgas $CO_2$, $N_2$ oder Argon ist.

7. Verfahren nach Anspruch 1, 5 oder 6, <u>dadurch gekennzeichnet,</u> daß die Entquecksilberung bei einer Temperatur erfolgt, bei der die spezifische Wärmemenge zur thermischen Entquecksilberung nach der Formel

$$\frac{Q}{m'} = \left[ cp' + \frac{R * cp''}{M_{Hg}} * \frac{\rho'' * T}{P_{Hg}} * X_{Hg} \right] * (T - T_o)$$

ein Minimum aufweist, wobei

| | | |
|---|---|---|
| Q | = | Wärmemenge |
| m' | = | Masse des Leuchtstoffes oder des Trägerstoffes |
| cp' | = | spez. Wärmekapazität des Trägerstoffes |
| cp'' | = | spez. Wärmekapazität des Schleppgases |
| $M_{Hg}$ | = | Molmasse von Quecksilber |
| $P_{Hg}$ | = | Quecksilber-Dampfdruck |
| R | = | allgemeine Gaskonstante |
| T | = | absolute Temperatur im System |
| $\rho''$ | = | Dichte des Schleppgases |
| $X_{Hg}$ | = | Quecksilberbeladung des Trägerstoffes |
| $T_o$ | = | ursprüngliche Temperatur von Trägerstoff und Schleppgas (Umgebungstemperatur) |

bedeuten.

8. Verfahren nach Anspruch 1, 2 und 4, <u>dadurch gekennzeichnet,</u> daß der aus einem Vorratsbehälter (1) ausgetragene Trägerstoff in einem Wirbelschichtofen (5) mit erhitztem Schleppgas durchströmt wird, wobei ein Stoffübergang von Quecksilber an das Schleppgas stattfindet, daß das angereicherte Schleppgas einem ersten Wärmetauscher (14) zugeführt wird, in dem Quecksilber auskondensiert, daß das entquecksilberte Schleppgas über einen zweiten Wärmetauscher (7) aufgeheizt und in den Ofen (5) zurückgeführt wird, und daß der entquecksilberte Trägerstoff aus dem Ofen ausgetragen wird.

9. Verfahren nach Anspruch 5 und 8, <u>dadurch gekennzeichnet,</u> daß ein Teil des Schleppgases über einen Aktivkohlefilter (19) aus dem System ausgeschieden wird.

10. Verfahren nach Anspruch 8 oder 9, <u>dadurch gekennzeichnt,</u> daß der Trägerstoff kontinuierlich durch den Ofen (5) geführt wird.

11. Verfahren nach einem der Ansprüche 8 - 10, <u>dadurch gekennzeichnet,</u> daß der den Ofen (5) verlassende Schleppgasstrom über ein Staubabscheideorgan (13) geführt ist.

12. Verfahren nach Anspruch 11, <u>dadurch gekennzeichnet,</u> daß wenigstens ein Teil des im Abscheideorgan (13) abgeschiedenen Staubes in den Ofen (5) zurückgeführt wird.

13. Verfahren nach Anspruch 1, 3 und 4, <u>dadurch gekennzeichnet,</u> daß ein Gemisch aus Trägerstoff und erhitztem Schleppgas einem Abscheideorgan (13) zugeführt wird, in dem der Trägerstoff von dem Schleppgas durchströmt wird, daß der Trägerstoff aus dem Abscheideorgan (13) ausgetragen wird, und daß das im Abscheideorgan (13) mit Quecksilber angereicherte Schleppgas einem ersten Wärmetauscher (14) zugeführt wird, in dem Quecksilber auskondensiert und daß das entquecksilberte Schleppgas über einen zweiten Wärmetauscher (7) erneut aufgeheizt wird.

**14.** Verfahren nach Anspruch 1 und 3, <u>dadurch gekennzeichnet</u>, daß ein Gemisch aus Trägerstoff und Schleppgas abwechselnd über ein erstes Abscheideorgan und ein zweites Abscheideorgan geführt wird.

**15.** Verfahren nach einem oder mehreren der vorhergehenden Ansprüche, <u>dadurch gekennzeichnet</u>, daß die Entquecksilberung des Trägerstoffes bei Unterdruck gegenüber dem Atmosphärendruck erfolgt.

**16.** Verfahren nach Anspruch 8, <u>dadurch gekennzeichnet</u>, daß dem bei einer Temperatur von 150 - 180°C betriebenen Ofen (5) ein zweiter Ofen nachgeschaltet ist, in dem die Temperatur 120 - 150°C beträgt.

**17.** Verfahren nach einem oder mehreren der vorhergehenden Ansprüche, <u>dadurch gekennzeichnet</u>, daß der zugeführte Trägerstoff vorgewärmt wird.

**18.** Einrichtung zur Durchführung eines Verfahrens nach Anspruch 1 mit einem Vorratsbehälter (1), aus dem mit Quecksilber beladener Trägerstoff ausgetragen und einer Schleppgasströmung ausgesetzt wird, bei der das mit Quecksilber angereicherte Schleppgas zur Abkühlung durch einen ersten Wärmetauscher (14) mit Kondensatablauf (15) geführt ist, mit einem zweiten Wärmetauscher (7) zum Aufheizen des Schleppgases und einem Gebläse (6), mit einer Mischvorrichtung zur innigen Durchmischung des Trägerstoffes mit Schleppgas, und mit einer Vorrichtung zum Austragen (10) des entquecksilberten Trägerstoffes aus der Mischvorrichtung.

**19.** Einrichtung nach Anspruch 18, <u>dadurch gekennzeichnet</u>, daß die Mischvorrichtung ein Wirbelschichtofen (5) ist.

**20.** Einrichtung nach Anspruch 18, <u>dadurch gekennzeichnet</u>, daß die Mischvorrichtung ein Mischrohr mit anschließendem Abscheideorgan ist.

**21.** Einrichtung nach Anspruch 20, <u>dadurch gekennzeichnet</u>, daß das Abscheideorgan ein Zyklonabscheider ist.

**22.** Einrichtung nach Anspruch 20, <u>dadurch gekennzeichnet</u>, daß das Abscheideorgan ein Heißgasfilter (29) ist.

**23.** Einrichtung nach einem der Ansprüche 18 - 22, <u>dadurch gekennzeichnet</u>, daß das Schleppgas im geschlossenen Kreislauf geführt ist.

**24.** Einrichtung nach Anspruch 19, <u>dadurch gekennzeichnet</u>, daß dem Wirbelschichtofen (5) ein Abscheideorgan (13) im Schleppgasströmungsweg nachgeschaltet ist, aus dem abgeschiedener Trägerstoff wenigstens zum Teil über eine Rohrleitung zum Wirbelschichtofen (5) zurückgeführt ist.

**25.** Einrichtung nach Anspruch 20, <u>dadurch gekennzeichnet</u>, daß ein erstes Abscheideorgan (13) vorgesehen ist, das alternativ zu einem zweiten Abscheideorgan an die Mischvorrichtung anschaltbar ist, wobei das das Abscheideorgan verlassende mit Quecksilber angereicherte Schleppgas auf einen Wärmetauscher (14) zur Kondensatableitung geschaltet ist, während das abgeschaltete Abscheideorgan an eine Kaltluftzufuhr angeschlossen ist.

FIG. 1

EP 0 668 362 A1

FIG. 2

FIG. 3

FIG. 4

FIG. 5

FIG. 6

EP 0 668 362 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,P | EP-A-0 624 409 (LVG LAMPENVERWERTUNGSGESELLSCH) 17.November 1994<br>* Spalte 6, Zeile 1 - Zeile 9; Ansprüche; Abbildungen *<br>--- | 1,2,4,5,<br>9-11,18,<br>23 | C22B43/00 |
| A | DE-C-36 09 517 (ELECTRO-OFENBAU MATTHIAS MARCUS GMBH) 19.November 1987<br><br>* Ansprüche; Abbildung *<br>--- | 1,4-6,<br>10-12,<br>18,23 | |
| A | DE-A-22 17 069 (PETERS AG CLAUDIUS) 18.Oktober 1973<br>* Ansprüche; Abbildung *<br>--- | 1,4,5,<br>10,18,23 | |
| A | DE-A-22 31 827 (GRAENGES ENG AB) 11.Januar 1973<br>* Ansprüche *<br>--- | 1,4,6,<br>10,18,23 | |
| A | DE-C-41 27 506 (HAK-ANLAGENBAU GMBH) 15.Oktober 1992<br>* Ansprüche *<br>--- | 1,6,15,<br>18 | **RECHERCHIERTE SACHGEBIETE (Int.Cl.6)** |
| A | US-A-4 701 212 (YAN TSOUNG Y) 20.Oktober 1987<br>* Ansprüche *<br>--- | 2,19,21 | C22B |
| A<br><br>D | EP-A-0 420 367 (ELECTRO-OFENBAU MATTHIAS MARCUS GMBH) 3.April 1991<br>* Ansprüche *<br>& DE-A-39 32 772 (ELECTRO-OFENBAU MATTHIAS MARCUS GMBH)<br>--- | 1,9,18 | |
| A | EP-A-0 248 198 (HERBORN PAUL) 9.Dezember 1987<br>* Ansprüche *<br>---<br>-/-- | 1,9,18 | |

Der vorliegende Recherchenbericht wurde für alle Patentansprüche erstellt

| Recherchenort | Abschlußdatum der Recherche | Prüfer |
|---|---|---|
| DEN HAAG | 9.Mai 1995 | Wittblad, U |

**Europäisches Patentamt**

**EUROPÄISCHER RECHERCHENBERICHT**

Nummer der Anmeldung

EP 95 10 2249

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-41 31 974 (POEPPEL DIETER) 8.April 1993 <br> * Ansprüche * | 1,9,18 | |
| D | & DE-C-41 31 974 (POEPPEL DIETER) <br> ----- | | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 9.Mai 1995 | Wittblad, U |

EPO FORM 1503 03.82 (P04C03)